(19) **Europäisches Patentamt / European Patent Office / Office européen des brevets**

(11) **EP 3 978 278 B1**

(12) **EUROPÄISCHE PATENTSCHRIFT**

(45) Veröffentlichungstag und Bekanntmachung des Hinweises auf die Patenterteilung:
**02.08.2023   Patentblatt 2023/31**

(21) Anmeldenummer: **21198679.9**

(22) Anmeldetag: **23.09.2021**

(51) Internationale Patentklassifikation (IPC):
**B60C 23/04** (2006.01)

(52) Gemeinsame Patentklassifikation (CPC):
**B60C 23/0476; B60C 23/0474**

(54) **VERFAHREN ZUM ERZEUGEN EINER REIFENDRUCK-WARNUNG**

METHOD FOR GENERATING A TYRE PRESSURE WARNING

PROCÉDÉ DE GÉNÉRATION D'UN AVERTISSEMENT DE PRESSION DES PNEUMATIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2020   DE 102020212428**

(43) Veröffentlichungstag der Anmeldung:
**06.04.2022   Patentblatt 2022/14**

(73) Patentinhaber: **Continental Reifen Deutschland GmbH**
**30165 Hannover (DE)**

(72) Erfinder:
• **Cyllik, Adrian**
  **30419 Hannover (DE)**
• **Lehmann, Joerg**
  **30419 Hannover (DE)**
• **Abeling, Stefan**
  **30419 Hannover (DE)**
• **Wilhelmsen, Sven**
  **30419 Hannover (DE)**
• **Hanna, Jörg**
  **30419 Hannover (DE)**
• **Surisetti, Siva Sankar**
  **30419 Hannover (DE)**

(74) Vertreter: **Continental Corporation**
**c/o Continental AG**
**Intellectual Property**
**Postfach 169**
**30001 Hannover (DE)**

(56) Entgegenhaltungen:
**EP-A1- 2 692 550       DE-A1-102016 221 633**
**JP-A- 2014 065 352     US-A1- 2017 305 213**

**Beschreibung**

Die Erfindung betrifft ein Verfahren zum Ausgeben einer Reifendruck-Warnung sowie ein Reifendruck-Überwachungssystem zur Durchführung des Verfahrens. Es ist bekannt, über ein Reifendruck-Überwachungssystem eine Reifendruck-Warnung auszugeben, wenn der absolute oder der relative Ist-Reifendruck eines Reifens um einen bestimmten Wert von einem Soll-Reifendruck abweicht bzw. der Ist-Reifendruck eine Reifendruck-Schwelle unterschreitet. Die Warnung kann dabei anhand von tatsächlich gemessenen Druckwerten erfolgen oder anhand von temperaturkompensierten Druckwerten, bei denen zusätzlich der temperaturabhängige Druck von idealen Gasen berücksichtigt wird.

Nach Ausgeben einer Reifendruck-Warnung kann diese Warnung auch zurückgesetzt bzw. die Reifendruck-Warnung wieder deaktiviert werden, wenn der Ist-Reifendruck wieder ansteigt. Um nicht zu viel Interaktion vom Fahrer / Servicepersonal zu verlangen, wird eine Reifendruck-Warnung automatisch dann deaktiviert, wenn der Ist-Reifendruck eine definierte Rücksetzschwelle übersteigt, wobei die Rücksetzschwelle normalerweise höher liegt als die Reifendruck-Schwelle für das Aktivieren der Reifendruck-Warnung, um ein ständiges Aktivieren und Deaktivieren von Druckwarnungen zu vermeiden, wenn der Druckwert um die Reifendruck-Schwelle schwankt.

Auch das Zurücksetzen kann temperaturkompensiert oder nicht temperaturkompensiert erfolgen. Beide Ansätze haben dabei ihre Vor- und Nachteile:
Der Vorteil der temperaturkompensierten Warnung ist, dass bei einem Druckverlust die Reifendruck-Warnung schneller ausgegeben wird und dass die Reifendruck-Warnung nicht automatisch deaktiviert wird, wenn sich der Reifen während der Fahrt weiter aufheizt. Gattungsgemäße Systeme sind aus EP2692550A1, JP2014065352A, DE102016221633 A1 und US2017/305213A1 bekannt.

Die Nachteile sind, dass eine Reifendruck-Warnung zu früh oder zu spät ausgegeben werden kann, wenn eine Referenztemperatur zur Ermittlung des temperaturkompensierten Reifendruckes nicht der tatsächlichen Reifeninnentemperatur entspricht. Zudem werden Änderung in der Reifeninnentemperatur in der Regel mit einem Zeitverzug von ca. 15 min relativ zu Änderungen bei den Druckwerten erfasst. Bei starken, plötzlichen Schwankungen in der Reifeninnentemperatur (längere Bremsphase, Fahren in eine Waschanlage, ...) kann es zu Fehlwarnungen kommen, wenn auf den temperaturkompensierten Reifendruck zurückgegriffen wird. Falls die Reifendruck-Warnung zu einem Zeitpunkt erfolgt, wenn der Ist-Reifendruck noch oberhalb des Soll-Reifendrucks oder der Reifendruck-Schwelle liegt, ist es dem Fahrer schwer zu vermitteln, wie er auf die Reifendruck-Warnung reagieren soll, da für den Fahrer augenscheinlich der Reifendruck in Ordnung ist. Die Akzeptanz für ein solches System sinkt daher.

Aufgrund dieser Nachteile wird stattdessen lediglich auf den nicht temperaturkompensierten Reifendruck zurückgegriffen, um eine Reifendruck-Warnung auszugeben. Damit werden die oben beschriebenen Nachteile behoben. Daraus ergeben sich jedoch weitere Nachteile. So kann eine Reifendruck-Warnung in einigen Fällen im Betrieb zurückgesetzt werden, ohne dass der Ist-Reifendruck durch ein Auffüllen des Reifens angepasst wurde. Ein Reifen hat z.B. einen Soll-Reifendruck von 9 bar und der Reifen wird bei einer Reifeninnentemperatur von 20°C auf 9 bar aufgefüllt. Mit der Zeit sinkt die Außentemperatur bzw. Umgebungstemperatur und auch die Reifeninnentemperatur auf -10°C und somit der Ist-Reifendruck bei einem kalten Reifen auf 7,97 bar, ohne dass Luft verloren geht (ideales Gasgesetz). Liegt der Ist-Reifendruck damit unterhalb einer festgelegten Reifendruck-Schwelle von -10% = 8,1 bar, wird der Fahrer zu Fahrtbeginn eine berechtigte Reifendruck-Warnung erhalten, da der Ist-Reifendruck für die vorherrschende Umgebungstemperatur bzw. Reifeninnentemperatur um 1 bar zu niedrig ist.

Wird eine Rücksetzschwelle von -5% = 8,55 bar angenommen, kann sich der Reifen während der Fahrt auf eine Reifeninnentemperatur von ca. 6,8°C erhöhen bevor der Ist-Reifendruck auf einen Druck von > 8,55 bar ansteigt. Während der Fahrt sind dabei Reifeninnentemperaturen von 40°C bis 50°C realistisch. Die Rücksatzschwelle wird also bei einer normalen Fahrt mit hoher Wahrscheinlichkeit erreicht, so dass die Reifendruck-Warnung deaktiviert wird, wenn keine Temperaturkompensation stattfindet. Der Fahrer kann dann nicht abschätzen, ob er ein Problem hat, oder nicht. Auch hierdurch sinkt die Akzeptanz für das System.

Dieser Nachteil kommt insbesondere dann zum Tragen, wenn der Reifen keinen Druck verliert und die Reifendruck-Warnung nur aufgrund des starken Absenkens der Umgebungstemperatur bzw. der Reifeninnentemperatur auftritt. Nichtsdestoweniger ist die Warnung berechtigt, da der vorliegende Ist-Reifendruck für die vorherrschende Umgebungstemperatur bzw. Reifeninnentemperatur zu niedrig ist. Verliert der Reifen hingegen wegen einer Undichtigkeit Luft kann es zwar sein, dass durch die Erwärmung während der Fahrt die Reifendruck-Warnung wieder automatisch zurückgesetzt bzw. deaktiviert wird, wenn die Rücksetzschwelle überschritten wird. Allerdings kühlt sich Reifen nach dem nächsten längeren Stopp wieder ab und der Fahrer würde dann erneut eine Reifendruck-Warnung erhalten, so dass er weiß, dass mit dem Reifendruck etwas nicht in Ordnung ist. Nichtsdestoweniger ist so ein Systemverhalten irritierend.

Aufgabe der Erfindung ist daher, ein Verfahren anzugeben, mit dem ein Fahrer in unterschiedlichen Situationen zuverlässig vor einem zu geringen Reifendruck gewarnt werden kann. Aufgabe ist weiterhin, ein Reifendruck-Überwachungssystem anzugeben.

Diese Aufgabe wird durch ein Verfahren nach Anspruch 1 sowie ein Reifendruck-Überwachungssystem gemäß dem weiteren unabhängigen Anspruch gelöst. Die Unteransprüche geben bevorzugte Weiterbildungen an.

Demnach ist ein Verfahren zum Erzeugen einer Reifendruck-Warnung für mindestens einen Reifen eines Fahrzeuges vorgesehen, mit mindestens den folgenden Schritten:

- Ermitteln eines Reifendruck-Istwertes in Abhängigkeit eines absoluten Ist-Reifendruckes, der in einem Innenraum des mindestens einen Reifens vorherrscht;
- Ermitteln, ob der Reifendruck-Istwert des mindestens einen Reifens einen Reifendruck-Schwellwert unterschreitet;
- Erzeugen und Ausgeben einer Reifendruck-Warnung zu einem Warnzeitpunkt, wenn der Reifendruck-Istwert des jeweiligen Reifens den Reifendruck-Schwellwert unterschreitet. Der Reifendruck-Istwert kann dabei der absolute Ist-Reifendruck sein oder aber ein relativer Ist-Reifendruck, der aus dem absoluten Ist-Reifendruck unmittelbar hervorgeht und daher abhängig von diesem ist.

Erfindungsgemäß sind weiterhin die Schritte vorgesehen:

- Ermitteln eines temperaturkompensierten Reifendruck-Istwertes bei Vorliegen einer Reifendruck-Warnung, wobei der temperaturkompensierte Reifendruck-Istwert zumindest nach dem Warnzeitpunkt ermittelt wird und abhängig ist von

    -- einer Referenztemperatur, wobei die Referenztemperatur abhängig ist von einer Reifeninnentemperatur zum Warnzeitpunkt, wobei die Reifeninnentemperatur in einem Innenraum des jeweiligen Reifens gemessen wird also in etwa die Temperatur des Gases im Innenraum des Reifens angibt,
    -- einem Reifendruck-Istwert des jeweiligen Reifens nach dem Warnzeitpunkt, und
    -- der Reifeninnentemperatur des jeweiligen Reifens nach dem Warnzeitpunkt;

- Ermitteln, ob der temperaturkompensierte Reifendruck-Istwert einen Rücksetz-Schwellwert überschreitet, wobei der Rücksetz-Schwellwert größer ist als der Reifendruck-Schwellwert; und
- Zurücksetzen der Reifendruck-Warnung, wenn der temperaturkompensierte Reifendruck-Istwert den Rücksetz-Schwellwert überschreitet.

In vorteilhafter Weise werden in dem erfindungsgemäßen Verfahren also sowohl der nicht-temperaturkompensierte Reifendruck-Istwert und der temperaturkompensierte Reifendruck-Istwert verwendet, wobei diese in den jeweiligen Verfahrensschritten zur Anwendung kommen, in denen ihre Vorteile ausgenutzt werden können. So kann eine Reifendruck-Warnung zunächst anhand des nicht-temperaturkompensierten Reifendruck-Istwertes zum Warnzeitpunkt ausgegeben werden, ohne dass es zu Verzögerungen bei abrupten Temperaturänderungen oder zu Ungenauigkeiten aufgrund einer unpräzisen Temperaturmessung kommt. Das Prüfen, ob nach dem Warnzeitpunkt ein Zurücksetzen der Reifendruck-Warnung erfolgen kann, erfolgt temperaturkompensiert, wodurch die Reifendruck-Warnung nicht automatisch deaktiviert bzw. zurückgesetzt wird, wenn sich der Reifen während der Fahrt aufheizt. Dadurch findet vorteilhafterweise erst dann ein Zurücksetzen statt, wenn der Reifen tatsächlich bei der jeweiligen Umgebungstemperatur aufgefüllt wird und nicht aufgrund von Temperaturveränderungen. Dabei wird vorzugsweise für jeden Reifen in der erfindungsgemäßen Weise eine Reifendruck-Warnung erzeugt bzw. zurückgesetzt.

Vorzugsweise ist weiterhin vorgesehen, dass der Reifendruck-Schwellwert und/oder der Rücksetz-Schwellwert für den jeweiligen Reifen abhängig sind/ist von einem vorgegebenen Reifendruck-Sollwert für den jeweiligen Reifen. Durch die Reifendruck-Warnung wird also sichergestellt, dass auf ein zu hohes Abweichen von dem Reifendruck-Sollwert reagiert werden kann. Grundsätzlich können aber für die Schwellwerte auch feste Werte vorgegeben werden, die unabhängig vom jeweiligen Reifendruck-Sollwert sind.

Vorzugsweise ist dabei vorgesehen, dass der Reifendruck-Schwellwert in Abhängigkeit eines ersten Faktors aus dem Reifendruck-Sollwert gebildet wird, beispielsweise über Reifendruck-Schwellwert (WpT) = erster Faktor (F1) x Reifendruck-Sollwert (WpS), wobei der erste Faktor kleiner als Eins ist, beispielsweise 0,9 (90%). Weiterhin ist vorgesehen, dass der Rücksetz-Schwellwert in Abhängigkeit eines zweiten Faktors aus dem Reifendruck-Sollwert gebildet wird, beispielsweise über Rücksetz-Schwellwert (WpRT) = zweiter Faktor (F2) x Reifendruck-Sollwert (WpS), wobei der zweite Faktor kleiner als Eins ist, beispielsweise 0,95 (95%). Damit kann ein einfacher Zusammenhang zwischen dem Reifendruck-Sollwert und dem jeweiligen Schwellwert hergestellt werden und dabei berücksichtigt werden, dass der Rücksetz-Schwellwert höher liegt als der Reifendruck-Schwellwert.

Vorzugsweise ist weiterhin vorgesehen, dass das Unterdrücken der Reifendruck-Warnung, wenn der temperaturkompensierte Reifendruck-Istwert den Rücksetz-Schwellwert überschreitet, lediglich dann stattfindet, wenn angenommen wird bzw. werden kann, dass die Reifeninnentemperatur zum Warnzeitpunkt in etwa der Umgebungstemperatur des jeweiligen Reifens entspricht. Dadurch wird berücksichtigt, dass die Bestimmung des temperaturkompensierten Reifendruck-Istwertes über die Referenztemperatur indirekt auch in Abhängigkeit der Umgebungstemperatur erfolgt.

Entspricht die Referenztemperatur zum Warnzeitpunkt nicht in etwa der Umgebungstemperatur ist auch der temperaturkompensierte Reifendruck-Istwert fehlerbehaftet. In dem Fall kann vorzugsweise auf den nicht-temperaturkompensierten Reifendruck-Istwert zurückgegriffen werden und für diesen ermittelt werden, ob dieser den Rücksetz-Schwellwert überschreitet.

Gemäß einer Weiterbildung ist vorgesehen, dass angenommen wird, dass die Reifeninnentemperatur des jeweiligen Reifens zum Warnzeitpunkt in etwa der Umgebungstemperatur entspricht, wenn sich der Reifen zum Warnzeitpunkt im Stillstand befindet und mindestens 15 Minuten vor dem Warnzeitpunkt nicht betrieben wurde, oder wenn sich der Reifen zum Warnzeitpunkt in Betrieb befindet aber vor dem Warnzeitpunkt nicht mehr als 5 Minuten, vorzugsweise nicht mehr als 2 Minuten, betrieben wurde. Unter diesen Annahmen kann eine Referenztemperatur aus der Reifeninnentemperatur ermittelt werden, die in etwa der Umgebungstemperatur entspricht und aus der ein temperaturkompensierter Reifendruck-Istwert folgt, der für ein Zurücksetzen bzw. Unterdrücken der Reifendruck-Warnung verwendet werden kann.

Vorzugsweise ist weiterhin vorgesehen, dass der temperaturkompensierte Reifendruck-Istwert berücksichtigt, wie sich der Reifendruck-Istwert ausgehend von der Referenztemperatur in Abhängigkeit der nach dem Warnzeitpunkt gemessenen Reifeninnentemperatur verändert, wobei der temperaturkompensierte Reifendruck-Istwert gebildet wird in Abhängigkeit eines Verhältnisses (TR/T2) zwischen der Referenztemperatur und der Reifeninnentemperatur. Dadurch kann in einfacher Weise die Temperaturabhängigkeit des Ist-Reifendruckes nach dem Warnzeitpunkt dargestellt werden. Das Zurücksetzen der Reifendruck-Warnung kann dann zuverlässig in Abhängigkeit dieses Zusammenhanges geprüft werden.

Vorzugsweise ist weiterhin vorgesehen, dass das Ermitteln eines temperaturkompensierten Reifendruck-Istwertes und das Ermitteln, ob der temperaturkompensierte Reifendruck-Istwert einen Rücksetz-Schwellwert überschreitet nach dem Warnzeitpunkt fortlaufend stattfindet bis die Reifendruck-Warnung zurückgesetzt wird. Demnach können gewisse Zeitzyklen vorgegeben werden, innerhalb derer das Zurücksetzen der Reifendruck-Warnung geprüft wird, so dass die Warnung zeitnah nach einer Behebung des Problems unterdrückt bzw. zurückgesetzt werden kann. Der Fahrer kann daher zeitnah darüber informiert werden.

Vorzugsweise ist weiterhin vorgesehen, dass die Referenztemperatur ab dem Warnzeitpunkt und bis zu einem Zurücksetzen der Reifendruck-Warnung radindividuell oder fahrzeugindividuell abgespeichert wird. Dazu kann vorzugsweise vorgesehen sein, dass eine Verarbeitungseinheit einen flüchtigen Speicher und/oder einen nicht-flüchtigen Speicher aufweist zum Abspeichern der Referenztemperatur ab dem Warnzeitpunkt und bis zu einem Zurücksetzen der Reifendruck-Warnung. Daher kann das Zurücksetzen für jeden Reifen einzeln fortlaufend geprüft werden, bei einem nicht-flüchtigen Speicher auch dann, wenn die Zündung zwischenzeitlich ausgestellt wird. Bei einem flüchtigen Speicher hingegen geht die Referenztemperatur bei einem Ausstellen der Zündung verloren, wodurch das Verfahren vorzeitig abgebrochen und damit die Warnung ebenfalls zurückgesetzt wird.

Bei einer fahrzeugindividuellen Betrachtung kann die Referenztemperatur auch aus einem Mittelwert aus den Reifeninnentemperaturen aller Räder zum Warnzeitpunkt folgen, wodurch Speicherplatz gespart werden kann. Für jeden zu prüfenden Reifen wird dann auf dieselbe Referenztemperatur zurückgegriffen, wobei angenommen werden kann, dass die Referenztemperatur, die der Umgebungstemperatur zum Warnzeitpunkt entsprechen soll, an allen Rädern ohnehin gleich ist.

Weiterhin ist auch ein Reifendruck-Überwachungssystem vorgesehen, insbesondere zur Durchführung des erfindungsgemäßen Verfahrens, mit einem Reifen-Sensor-Modul, das ausgebildet ist, einen Reifendruck-Istwert in Abhängigkeit eines absoluten Ist-Reifendruckes, der in einem Innenraum des Reifens vorherrscht, zu ermitteln, wobei das Reifen-Sensor-Modul vorzugsweise ferner ausgebildet ist, die Reifeninnentemperatur des jeweiligen Reifens zu erfassen, und
einer Verarbeitungseinheit, die ausgebildet ist,

- zu Ermitteln, ob der Reifendruck-Istwert des mindestens einen Reifens einen Reifendruck-Schwellwert unterschreitet, und
- eine Reifendruck-Warnung zu einem Warnzeitpunkt zu erzeugen und auszugeben, wenn der Reifendruck-Istwert des jeweiligen Reifens den Reifendruck-Schwellwert unterschreitet.

Erfindungsgemäß ist dabei vorgesehen, dass die Verarbeitungseinheit ferner ausgebildet ist,

- einen temperaturkompensierten Reifendruck-Istwert bei Vorliegen einer Reifendruck-Warnung zu ermitteln, wobei der temperaturkompensierte Reifendruck-Istwert zumindest nach dem Warnzeitpunkt ermittelt werden kann und abhängig ist von

    -- einer Referenztemperatur, wobei die Referenztemperatur abhängig ist von einer Reifeninnentemperatur zum Warnzeitpunkt, wobei die Reifeninnentemperatur in einem Innenraum des jeweiligen Reifens messbar ist,

-- einem Reifendruck-Istwert des jeweiligen Reifens nach dem Warnzeitpunkt, und

-- der Reifeninnentemperatur des jeweiligen Reifens nach dem Warnzeitpunkt,

- zu Ermitteln, ob der temperaturkompensierte Reifendruck-Istwert einen Rücksetz-Schwellwert überschreitet, wobei der Rücksetz-Schwellwert größer ist als der Reifendruck-Schwellwert, und
- die Reifendruck-Warnung zurückzusetzen, wenn der temperaturkompensierte Reifendruck-Istwert den Rücksetz-Schwellwert überschreitet.

Zur Durchführung des erfindungsgemäßen Verfahrens ist also lediglich ein Reifen-Sensor-Modul und eine entsprechend programmierte Verarbeitungseinheit innerhalb oder außerhalb des Reifens nötig, die drahtlos oder drahtgebunden miteinander kommunizieren. Das Verfahren ist dadurch einfach nachträglich zu implementieren.

Die Erfindung wird im Folgenden anhand von Zeichnungen näher erläutert. Es zeigen:

Fig. 1    eine schematische Ansicht eines Reifendruck-Überwachungssystems; und

Fig. 2    ein Flussdiagramm eines erfindungsgemäßen Verfahrens zum Erzeugen einer Reifendruck-Warnung.

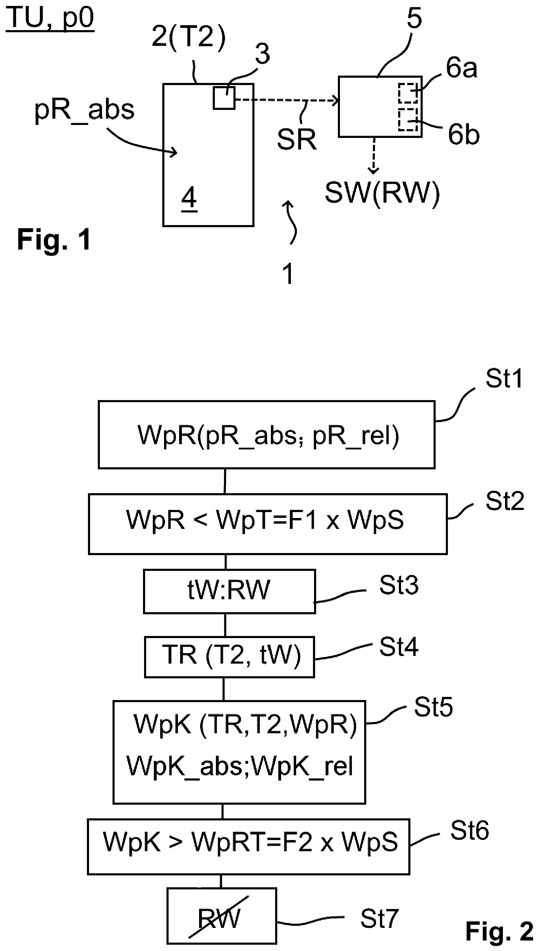

In Figur 1 ist schematisch ein Reifendruck-Überwachungssystem 1 für ein Fahrzeug dargestellt, mit dem das in Fig. 2 dargestellte Verfahren zum Erzeugen einer Reifendruck-Warnung RW ausgeführt werden kann. Die Reifendruck-Warnung RW kann hierbei an einen Fahrer des Fahrzeuges ausgegeben werden und/oder aber an ein automatisiertes System im Fahrzeug, so dass der Fahrer bzw. das automatisierte System in Abhängigkeit der Reifendruck-Warnung RW entsprechend reagieren können.

Die Reifendruck-Warnung RW gibt hierbei an, ob ein Reifendruck-Istwert WpR, der abhängig ist von einem tatsächlich vorherrschenden, absoluten Ist-Reifendruck pR_abs eines Reifens 2 des Fahrzeuges, einen Reifendruck-Schwellwert WpT unterschreitet. Der Reifendruck-Schwellwert WpT kann beispielsweise über einen ersten Faktor F1 mit einem vorgegebenen Reifendruck-Sollwert WpS zusammenhängen, d.h. WpT = F1 x WpS. Der Faktor F1 kann beispielsweise 0,9 sein, so dass eine Reifendruck-Warnung RW erzeugt und ausgegeben wird, wenn der Reifendruck-Istwert WpR um mehr als 10% vom Reifendruck-Sollwert WpS nach unten hin abweicht. Damit ist das Ausgeben einer Reifendruck-Warnung RW gleichwirkend damit, dass der Reifendruck-Istwert WpR um einen vorgegebenen Wert von dem Reifendruck-Sollwert WpS abweicht.

Die Reifendruck-Warnung RW kann hierbei in einem Warnsignal SW ausgegeben werden, das entsprechend weiterverarbeitet werden kann, um dem Fahrer oder dem automatisierten System mitzuteilen, dass der Reifendruck-Istwert WpR unter den Reifendruck-Schwellwert WpT gesunken ist und der Reifendruck-Istwert WpR daher durch Einlassen von Luft in den Reifen 2 anzupassen ist.

Um ein ständiges Aktivieren und Deaktivieren von Reifendruck-Warnungen RW zu vermeiden, wenn der Reifendruck-Istwert WpR um den Reifendruck-Schwellwert WpT schwankt, ist ein Rücksetz-Schwellwert WpRT definiert, der höher ist als der Reifendruck-Schwellwert WpT. Beispielsweise kann der Rücksetz-Schwellwert WpRT mit dem Reifendruck-Sollwert WpS über einen zweiten Faktor F2= 0,95 zusammenhängen, d.h. WpRT = 0,95 x WpS. Die Reifendruck-Warnung RW wird also erst dann zurückgesetzt bzw. deaktiviert, wenn ein Druckverlust von weniger als 5% vom Reifendruck-Sollwert WpS vorliegt.

Zum Erzeugen der Reifendruck-Warnung RW ist gemäß Fig. 2 in einem ersten Schritt St1 zunächst vorgesehen, den tatsächlichen, absoluten Ist-Reifendruck pR_abs über ein Reifen-Sensor-Modul 3 zu messen, das vorzugsweise in einem Innenraum 4 des Reifens 2 angeordnet ist, beispielsweise am Reifen 2 selbst oder an einer Felge, auf der der Reifen 2 aufgezogen ist. Das Reifen-Sensor-Modul 3 kann dabei über einen Drucksensor den tatsächlich vorherrschenden, absoluten Ist-Reifendruck pR_abs im Innenraum 4 erfassen und in Abhängigkeit davon ein Reifendruck-Signal SR an eine Verarbeitungseinheit 5 des Reifendruck-Überwachungssystems 1 ausgeben. Das Reifen-Sensor-Modul 3 kann aber auch außerhalb des Reifens 2, beispielsweise an der Felge, angeordnet sein und über eine (Ventil)Öffnung, den tatsächlich vorherrschenden, absoluten Ist-Reifendruck pR_abs im Innenraum 4 des Reifens 2 messen. Die Verarbeitungseinheit 5 kann sich beispielsweise außen oder innen am Reifen 2 oder nahe dem Reifen 2, beispielsweise auch an der Felge, auf der der Reifen 2 aufgezogen ist, befinden oder aber abseits des Reifens 2 bzw. des Rades, wobei das Reifendruck-Signal SR vorzugsweise drahtlos auf die Verarbeitungseinheit 5 übertragen wird.

Von dem Drucksensor im Reifen-Sensor-Modul 3 wird normalerweise ein absoluter Ist-Reifendruck pR_abs gemessen, in Abhängigkeit dessen das Reifendruck-Signal SR erzeugt und ausgegeben wird. Der Wert dieses absoluten Ist-Reifendruckes pR_abs kann dann als Reifendruck-Istwert WpR im Verfahren weiterverwendet werden. In Abhängigkeit des Reifendruck-Signals SR kann in der Verarbeitungseinheit 5 aber auch ein relativer Ist-Reifendruck pR_rel ermittelt werden, d.h. ein Druck in Relation zu einem Umgebungsdruck p0 der Atmosphäre, z.B. mit p0 = 1 bar. Der relative Ist-Reifendruck pR_rel ergibt sich dabei z.B. aus pR_rel = pR_abs - p0. Auch dieser relative Ist-Reifendruck pR_rel kann als Reifendruck-Istwert WpR im Verfahren weiterverwendet werden. In beiden Fällen ist der Reifendruck-Istwert WpR in Abhängigkeit des im Reifen 2 aktuell vorherrschenden, absoluten Ist-Reifendruckes pR_abs gebildet.

In einem zweiten Schritt St2 wird die Abweichung des Reifendruck-Istwertes WpR von dem Reifendruck-Sollwert WpS ermittelt, wobei der Reifendruck-Istwert WpR dazu in der Verarbeitungeinheit 5 mit einem vorab festgelegten Reifendruck-Schwellwert WpT, der wie oben beschrieben aus dem Reifendruck-Sollwert WpS folgt, verglichen wird. Unterschreitet der Reifendruck-Istwert WpR zu einem Warnzeitpunkt tW den Reifendruck-Schwellwert WpT bzw. weicht der Reifendruck-Istwert WpR um mehr als einen vorbestimmten Wert von dem Reifendruck-Sollwert WpS ab, wird in einem dritten Schritt St3 eine Reifendruck-Warnung RW erzeugt und über das Warnsignal SW ausgegeben. Die Reifendruck-Warnung RW wird hierbei vorzugsweise reifenindividuell erzeugt und ausgegeben.

Je nachdem, ob als Reifendruck-Istwert WpR der absolute Ist-Reifendruck pR_abs oder der relative Ist-Reifendruck pR_rel verwendet wird, wird der Reifendruck-Sollwert WpS bzw. der Reifendruck-Schwellwert WpT entsprechend mit oder ohne Einbeziehung des Umgebungsdruckes p0 festgelegt.

Gleichzeitig wird bei Vorliegen der Reifendruck-Warnung RW in einem vierten Schritt St4 eine Referenztemperatur TR ermittelt und abgespeichert, die einer gemessenen Reifeninnentemperatur T2 bei Eintreten der Reifendruck-Warnung RW zum Warnzeitpunkt tW entspricht. Die Referenztemperatur TR bzw. die Reifeninnentemperatur T2 kann beispielsweise von dem jeweiligen Reifen-Sensor-Modul 3 gemessen bzw. abgeschätzt werden. Die Reifeninnentemperatur T2 gibt dabei in etwa die Temperatur des Gases im Innenraum 4 des Reifens 2 an, wobei diese je nach Position des temperaturmessenden Reifen-Sensor-Moduls 3 von der Felge oder vom Reifen 2 beeinflusst werden kann. Liegen Reifendruck-Warnungen RW von mehreren Reifen 2 vor, kann für jeden Reifen 2 individuell eine Referenztemperatur TR ermittelt und abgespeichert werden. Es kann aber auch vorgesehen sein, dass nur eine Referenztemperatur TR für alle Reifen 2, für die eine Reifendruck-Warnung RW vorliegt, ermittelt und abgespeichert wird, wobei die Referenztemperatur TR aus einem Mittelwert der Reifeninnentemperaturen T2 der jeweiligen Reifen 2 zum Warnzeitpunkt tW folgt.

In einem nachfolgenden fünften Schritt St5 wird in der Verarbeitungseinheit 5 aus dem Reifendruck-Istwert WpR ein temperaturkompensierter Reifendruck-Istwert WpK berechnet. Gegenüber dem Reifendruck-Istwert WpR werden bei dem temperaturkompensierten Reifendruck-Istwert WpK auch Abweichungen berücksichtigt, die sich aufgrund der Reifeninnentemperatur T2 ergeben. So misst das Reifen-Sensor-Modul 3 bei höheren Reifeninnentemperaturen T2 einen anderen absoluten Ist-Reifendruck pR_abs als bei niedrigen Reifeninnentemperaturen T2, ohne dass tatsächlich Luft aus dem Reifen 2 entwichen ist. Dies ergibt sich aus den allgemeinen Gasgleichungen bzw. den thermischen Zustandsgleichungen für ideale Gase, wonach sich der Druck mit der Temperatur im Innenraum 4 des Reifens 2 ändert.

Dabei wird davon ausgegangen, dass die vom Reifen-Sensor-Modul 3 gemessene Reifeninnentemperatur T2 und damit auch die Referenztemperatur TR zum Warnzeitpunkt tW in etwa einer Umgebungstemperatur TU außerhalb des Reifens 2 entspricht. Um dies sicherzustellen, kann die Ermittlung des temperaturkompensierten Reifendruck-Istwertes WpK und die Durchführung der darauf basierenden, nachfolgenden Verfahrensschritte des erfindungsgemäßen Verfahrens auf Situationen beschränkt werden, für die mit hoher Wahrscheinlichkeit davon ausgegangen werden kann, dass die Reifeninnentemperatur T2 auch in etwa der Umgebungstemperatur TU entspricht. Dies kann insbesondere dann angenommen werden, wenn der Reifen 2 "kalt" ist. Darunter ist zum Beispiel zu verstehen, dass sich der Reifen 2 während des Warnzeitpunktes tW im Stillstand befindet und die letzte Fahrt mehr als 15 bis 30 Minuten zurückliegt oder dass ein in Fahrt befindlicher Reifen 2 zum Warnzeitpunkt tW beispielsweise nicht länger als zwischen einer und fünf Minuten betrieben wurde. Dies kann bei der Durchführung der Verfahrensschritte St5 und Folgende entsprechend berücksichtigt werden.

Der temperaturkompensierte Reifendruck-Istwert WpK kann entweder auf dem absoluten Ist-Reifendruck pR_abs oder auf dem relativen Ist-Reifendruck pR_rel basieren, wobei folgendes gilt:

$$WpK: WpK\_abs = TR/T2 * pR\_abs$$

oder

$$WpK: WpK\_rel = TR/T2 * (pR\_rel + p0) - p0,$$

wobei TR die gespeicherte Referenztemperatur (in Kelvin), T2 die aktuell gemessene Reifeninnentemperatur (in Kelvin), pR_abs der gemessene absolute Ist-Reifendruck (in bar, psi, kPa,...), pR_rel der relative Ist-Reifendruck (pR_rel = pR - p0) (in bar, psi, kPa,...) und p0 der Umgebungsdruck (in bar, psi, kPa,...) ist. Je nachdem, ob auf den absoluten oder auf den relativen Ist-Reifendruck pRabs, pRrel zurückgegriffen werden soll, wird als temperaturkompensierter Reifendruck-Istwert WpK in den nachfolgenden Schritten ein absoluter temperaturkompensierter Reifendruck-Istwert WpK_abs oder ein relativer temperaturkompensierter Reifendruck-Istwert WpK_rel verwendet.

In einem sechsten Schritt St6 wird anschließend geprüft, ob der Rücksetz-Schwellwert WpRT überschritten wird. Diese Prüfung erfolgt jedoch nicht anhand des Reifendruck-Istwertes WpR, sondern anhand des jeweiligen temperaturkompensierten Reifendruck-Istwertes WpK (WpK_abs oder WpK_rel). Der Rücksetz-Schwellwert WpRT wird dabei mit oder ohne Einbeziehung des Umgebungsdruckes p0 festgelegt, je nachdem, ob auf den absoluten oder den relativen temperaturkompensierten Reifendruck-Istwert WpK_abs, WpK_rel zurückgegriffen wird.

Die Ermittlung und Prüfung in den Schritten St5 und St6 erfolgt dabei fortlaufend solange die Reifendruck-Warnung RW vorliegt. Zudem werden diese Schritte St5 und St6 vorzugsweise für jeden Reifen 2 durchgeführt, für den eine Reifendruck-Warnung RW vorliegt. Wird zu einem bestimmten Zeitpunkt ein Überschreiten des jeweiligen Rücksetz-Schwellwertes WpRT festgestellt, wird in einem siebenten Schritt St7 die Reifendruck-Warnung RW wieder zurückgesetzt bzw. deaktiviert.

Ein solches Verfahren führt beispielsweise zu dem folgenden Überwachungs-Verhalten:
Ein Reifen 2 hat einen Reifendruck-Sollwert WpS von 9 bar (relativ) und wird bei einer Reifentemperatur T2 von z.B. 20°C auf einen Reifendruck-Istwert WpR von 9 bar (relativer Ist-Reifendruck p_rel) aufgefüllt. Der Reifendruck-Schwellwert WpT liegt demnach bei -10% des Reifendruck-Sollwertes WpS, d.h. bei 8,1 bar (relativ). Der Rücksetz-Schwellwert WpRT liegt bei -5% des Reifendruck-Sollwertes WpS, d.h. bei 8,55 bar (relativ). Mit der Zeit sinkt die Umgebungstemperatur TU und damit bei einem kalten Reifen 2 auch die gemessene Reifeninnentemperatur T2 auf -10°C. Folglich reduziert sich der Reifendruck-Istwert WpR auf 8 bar (relativer Ist-Reifendruck p_rel). Daraufhin wird eine Reifendruck-Warnung RW ausgegeben, über die der Fahrer bei Fahrtbeginn berechtigterweise eine Warnung erhält, da der Reifendruck-Istwert WpR für die vorherrschende Reifeninnentemperatur T2 um 1 bar zu niedrig ist (vgl. Schritt St2, St3). Der Fahrer hat zu Fahrtbeginn aber keine Möglichkeit, den Reifendruck-Istwert WpR durch Aufpumpen des Reifens 2 zu korrigieren und beginnt seine Fahrt.

Während der Fahrt erwärmt sich der Reifen 2 auf eine Reifeninnentemperatur T2 von 40°C, wobei die Reifeninnentemperatur T2 in dem Falle nicht mehr der Umgebungstemperatur TU entspricht. Der Reifendruck-Istwert WpR beträgt bei einer Reifeninnentemperatur T2 von 40°C dann (idealerweise) 9,68 bar (relativer Ist-Reifendruck p_rel). Der Reifendruck-Istwert WpR liegt damit über dem Rücksetz-Schwellwert WpRT von 8,55 bar (relativ). Wenn eine Deaktivierung der Reifendruck-Warnung RW anhand des Reifendruck-Istwertes WpR erfolgen würde, würde in diesem Beispiel bereits eine Deaktivierung der Reifendruck-Warnung RW erfolgen, wenn sich der Reifen 2 von -10°C auf +7°C erwärmt hat, da dann ein Reifendruck-Istwert WpR von 8,6 bar (relativer Ist-Reifendruck p_rel) gemessen wird, der oberhalb des Rücksetz-Schwellwertes WpRT liegt.

Durch die erfindungsgemäßen Schritte St4, St5 und St6 wird in der Verarbeitungseinheit 5 allerdings die Reifeninnentemperatur T2 von -10°C als Referenztemperatur TR gespeichert, wobei davon ausgegangen wird, dass dies zum Warnzeitpunkt tW auch in etwa die Umgebungstemperatur TU war, und basierend darauf der temperaturkompensierte Reifendruck-Istwert WpK (WpK_abs oder WkP_rel) berechnet. Dieser wird dann für den Vergleich mit dem Rücksetz-Schwellwert WpRT herangezogen, um ein Deaktivieren bzw. Rücksetzen der Reifendruck-Warnung RW zu prüfen. Erwärmt sich der Reifen 2 während der Fahrt wie oben beschrieben auf eine Reifeninnentemperatur T2 von 40°C, ist der relative temperaturkompensierte Reifendruck-Istwert $WpK\_rel = (273,14 - 10)/(273,14 + 40) * (9,68 + 1bar) - 1bar = 7,98$ bar. Wird von absoluten Druckwerten ausgegangen, ist entsprechend die obige Formel für den absoluten temperaturkompensierten Reifendruck-Istwert WpK_abs zu verwenden.

Dabei ist zu erkennen, dass der relative temperaturkompensierte Reifendruck-Istwert WpK_rel geringfügig unterhalb des Reifendruck-Istwertes WpR von 8 bar (relativer Ist-Reifendruck p_rel) liegt, bei dem die Reifendruck-Warnung RW bei einer Reifeninnentemperatur T2 von - 10°C aktiviert bzw. ausgegeben wurde. Der relative temperaturkompensierte Reifendruck-Istwert WpK_rel liegt damit auch während der Fahrt (T2 = 40°C) deutlich unterhalb des Rücksetz-Schwellwertes WpRT von 8,55 bar (relativ). Entsprechend würde dies auch für den absoluten temperaturkompensierten Reifendruck-Istwert WpK_abs gelten.

Dies hat zur Folge, dass die Reifendruck-Warnung RW korrekterweise weiterhin bestehen bleibt, obwohl der nicht-temperaturkompensierte Reifendruck-Istwert WpR bei einer Reifeninnentemperatur T2 von 40°C größer als der Rücksetz-Schwellwert WpRT ist. Für den kalten Reifen 2 in der aktuellen kalten Umgebung mit TU = -10°C ist der Reifendruck-Istwert WpR nämlich zu niedrig.

Die einzige Möglichkeit, die Reifendruck-Warnung RW zurückzusetzen bzw. zu deaktivieren ist in dem Fall, den Reifendruck-Istwert WpR durch ein Aufpumpen des Reifens 2 zu erhöhen. Dies erfolgt idealerweise dann, wenn der Reifen 2 abgekühlt ist, d.h. die Reifeninnentemperatur T2 in etwa der Umgebungstemperatur TU entspricht, d.h. TU ≈ T2 = -10°C. Bei dieser Reifeninnentemperatur T2 wird der Reifen 2 dann auf den vorgegebenen Reifendruck-Sollwert WpS von 9,0 bar (relativ) aufgefüllt. Erst dann hat der Reifen 2 den richtigen Reifendruck-Istwert WpR (relativ) für die vorliegende Umgebungstemperatur TU von -10°C, so dass nach dem obigen Verfahren der relative temperaturkompensierte Reifendruck-Istwert WpK_rel auch den Rücksetz-Schwellwert WpRT wieder überschreiten wird und daher die Reifendruck-Warnung RW deaktiviert bzw. zurückgesetzt wird.

Das Speichern der Referenztemperatur RT für den jeweiligen Reifen 2 erfolgt normalerweise lediglich für den Zeitraum, in dem die Reifendruck-Warnung RW aktiv ist bzw. nur bis zu dem Zeitpunkt, zu dem die Reifendruck-Warnung RW anhand des temperaturkompensierten Reifendruck-Istwertes WpK für den jeweiligen Reifen 2 deaktiviert wird. Dazu ist in der Verarbeitungseinheit 5 ein flüchtiger Speicher 6a oder ein nicht-flüchtiger Speicher 6b vorgesehen. Bei Systemen, deren Verarbeitungseinheit 5 mit "Zündung aus" von der Stromversorgung getrennt wird, gehen die gespeicherten Referenztemperaturen RT verloren, wenn ein derartiger flüchtiger Speicher 6a verwendet wird, was automatisch auch zu einer Deaktivierung der Reifendruck-Warnung RW führt. Alternativ kann daher auch auf einen nicht-flüchtigen Speicher 6b zurückgegriffen werden.

**Bezugszeichenliste**

| | |
|---|---|
| 1 | Reifendruck-Überwachungssystem |
| 2 | Reifen |
| 3 | Reifen-Sensor-Modul |
| 4 | Innenraum des Reifens 2 |
| 5 | Verarbeitungseinheit |
| 6a | flüchtiger Speicher |
| 6b | nicht-flüchtiger Speicher |
| F1 | erster Faktor |
| F2 | zweiter Faktor |
| p0 | Umgebungsdruck |
| pR_abs | absoluter Ist-Reifendruck |
| pR_rel | relativer Ist-Reifendruck |
| RW | Reifendruck-Warnung |
| SR | Reifendruck-Signal |
| SW | Warnsignal |
| tW | Warnzeitpunkt |
| T2 | Reifeninnentemperatur |
| TR | Referenztemperatur |
| TU | Umgebungstemperatur |
| WpK | temperaturkompensierter Reifendruck-Istwert |
| WpK_abs | absoluter temperaturkompensierter Reifendruck-Istwert |
| WpK-rel | relativer temperaturkompensierter Reifendruck-Istwert |
| WpR | Reifendruck-Istwert |
| WpRT | Rücksetz-Schwellwert |
| WpS | Reifendruck-Sollwert |
| WpT | Reifendruck-Schwellwert |

**Patentansprüche**

1. Verfahren zum Erzeugen einer Reifendruck-Warnung (RW) für mindestens einen Reifen (2) eines Fahrzeuges, mit mindestens den folgenden Schritten:

   - Ermitteln eines Reifendruck-Istwertes (WpR) in Abhängigkeit eines absoluten Ist-Reifendruckes (pR_abs), der in einem Innenraum (4) des mindestens einen Reifens (2) vorherrscht (St1);
   - Ermitteln, ob der Reifendruck-Istwert (WpR) des mindestens einen Reifens (2) einen Reifendruck-Schwellwert (WpT) unterschreitet (St2); und
   - Erzeugen und Ausgeben einer Reifendruck-Warnung (RW) zu einem Warnzeitpunkt (tW), wenn der Reifendruck-Istwert (WpR) des jeweiligen Reifens (2) den Reifendruck-Schwellwert (WpT) unterschreitet (St3),

   **dadurch gekennzeichnet, dass**
   weiterhin die Schritte vorgesehen sind:

   - Ermitteln eines temperaturkompensierten Reifendruck-Istwertes (WpK) bei Vorliegen einer Reifendruck-Warnung (RW) (St4, St5), wobei der temperaturkompensierte Reifendruck-Istwert (WpK) zumindest nach dem Warnzeitpunkt (tW) ermittelt wird und abhängig ist von

     -- einer Referenztemperatur (TR), wobei die Referenztemperatur (TR) abhängig ist von einer Reifeninnentemperatur (T2) zum Warnzeitpunkt (tW), wobei die Reifentemperatur (T2) in einem Innenraum (4) des jeweiligen Reifens (2) gemessen wird,

-- einem Reifendruck-Istwert (WpR) des jeweiligen Reifens (2) nach dem Warnzeitpunkt (tW), und
-- der Reifeninnentemperatur (T2) des jeweiligen Reifens (2) nach dem Warnzeitpunkt (tW);

- Ermitteln, ob der temperaturkompensierte Reifendruck-Istwert (WpK) einen Rücksetz-Schwellwert (WpRT) überschreitet (St6), wobei der Rücksetz-Schwellwert (WpRT) größer ist als der Reifendruck-Schwellwert (WpT); und
- Rücksetzen der Reifendruck-Warnung (RW), wenn der temperaturkompensierte Reifendruck-Istwert (WpK) den Rücksetz-Schwellwert (WpRT) überschreitet (St7).

2. Verfahren nach Anspruch 1, **dadurch gekennzeichnet, dass** der Reifendruck-Schwellwert (WpT) und/oder der Rücksetz-Schwellwert (WpRT) für den jeweiligen Reifen (2) abhängig sind/ist von einem vorgegebenen Reifendruck-Sollwert (WpS) für den jeweiligen Reifen (2) oder festgelegte Werte sind.

3. Verfahren nach Anspruch 2, **dadurch gekennzeichnet, dass**

- der Reifendruck-Schwellwert (WpT) in Abhängigkeit eines ersten Faktors (F1) aus dem Reifendruck-Sollwert (WpS) gebildet wird, beispielsweise über WpT = F1 x WpS, wobei der erste Faktor (F1) kleiner als Eins ist, beispielsweise 0,9, und/oder
- der Rücksetz-Schwellwert (WpRT) in Abhängigkeit eines zweiten Faktors (F2) aus dem Reifendruck-Sollwert (WpS) gebildet wird, beispielsweise über WpRT = F2 x WpS, wobei der zweite Faktor (F2) kleiner als Eins ist, beispielsweise 0,95.

4. Verfahren nach einem der vorhergehenden Ansprüche, **dadurch gekennzeichnet, dass** das Zurücksetzen der Reifendruck-Warnung (RW), wenn der temperaturkompensierte Reifendruck-Istwert (WpK) den Rücksetz-Schwellwert (WpRT) überschreitet, lediglich dann stattfindet, wenn angenommen wird, dass die Reifeninnentemperatur (T2) zum Warnzeitpunkt (tW) in etwa einer Umgebungstemperatur (TU) des jeweiligen Reifens (2) entspricht.

5. Verfahren nach Anspruch 4, **dadurch gekennzeichnet, dass** angenommen wird, dass die Reifentemperatur (T2) des jeweiligen Reifens (2) zum Warnzeitpunkt (tW) in etwa der Umgebungstemperatur (TU) entspricht, wenn sich der Reifen (2) zum Warnzeitpunkt (tW) im Stillstand befindet und mindestens 15 Minuten vor dem Warnzeitpunkt (tW) nicht betrieben wurde, oder wenn sich der Reifen (2) zum Warnzeitpunkt (tW) in Betrieb befindet aber vor dem Warnzeitpunkt (tW) nicht mehr als 5 Minuten, vorzugsweise nicht mehr als 2 Minuten, betrieben wurde.

6. Verfahren nach einem der vorhergehenden Ansprüche, **dadurch gekennzeichnet, dass** der temperaturkompensierte Reifendruck-Istwert (WpK) berücksichtigt, wie sich der Reifendruck-Istwert (WpR) ausgehend von der Referenztemperatur (TR) in Abhängigkeit der nach dem Warnzeitpunkt (tW) gemessenen Reifeninnentemperatur (T2) verändert, wobei der temperaturkompensierte Reifendruck-Istwert (WpK) dazu in Abhängigkeit eines Verhältnisses (TR/T2) zwischen der Referenztemperatur (TR) und der Reifeninnentemperatur (T2) gebildet wird.

7. Verfahren nach einem der vorhergehenden Ansprüche, **dadurch gekennzeichnet, dass** das Ermitteln eines temperaturkompensierten Reifendruck-Istwertes (WpK) und das Ermitteln, ob der temperaturkompensierte Reifendruck-Istwert (WpK) einen Rücksetz-Schwellwert (WpRT) überschreitet nach dem Warnzeitpunkt (tW) fortlaufend stattfindet bis die Reifendruck-Warnung (RW) zurückgesetzt wird.

8. Verfahren nach einem der vorhergehenden Ansprüche, **dadurch gekennzeichnet, dass** die Referenztemperatur (RT) ab dem Warnzeitpunkt (tW) und bis zu einem Zurücksetzen der Reifendruck-Warnung (RW) radindividuell oder fahrzeugindividuell abgespeichert wird.

9. Reifendruck-Überwachungssystem (1), insbesondere zur Durchführung eines Verfahrens nach einem der vorhergehenden Ansprüche, mit

- einem Reifen-Sensor-Modul (3), das ausgebildet ist, einen Reifendruck-Istwert (WpR) in Abhängigkeit eines absoluten Ist-Reifendruckes (pR_abs), der in dem Innenraum (4) des Reifens (2) vorherrscht, zu ermitteln und
- einer Verarbeitungseinheit (5), die ausgebildet ist,

-- zu Ermitteln, ob der Reifendruck-Istwert (WpR) des mindestens einen Reifens (2) einen Reifendruck-Schwellwert (WpT) unterschreitet,
-- eine Reifendruck-Warnung (RW) zu einem Warnzeitpunkt (tW) zu erzeugen und auszugeben, wenn der Reifendruck-Istwert (WpR) des jeweiligen Reifens (2) den Reifendruck-Schwellwert (WpT) unterschreitet,

**dadurch gekennzeichnet, dass**
die Verarbeitungseinheit (5) ferner ausgebildet ist,

- einen temperaturkompensierten Reifendruck-Istwert (WpK) bei Vorliegen einer Reifendruck-Warnung (RW) zu ermitteln, wobei der temperaturkompensierte Reifendruck-Istwert (WpK) zumindest nach dem Warnzeitpunkt (tW) ermittelt werden kann und abhängig ist von

-- einer Referenztemperatur (TR), wobei die Referenztemperatur (TR) abhängig ist von einer Reifeninnentemperatur (T2) zum Warnzeitpunkt (tW), wobei die Reifentemperatur (T2) in einem Innenraum (4) des jeweiligen Reifens (2) messbar ist,
-- einem Reifendruck-Istwert (WpR) des jeweiligen Reifens (2) nach dem Warnzeitpunkt (tW), und
-- einer Reifeninnentemperatur (T2) des jeweiligen Reifens (2) nach dem Warnzeitpunkt (tW),

- zu Ermitteln, ob der temperaturkompensierte Reifendruck-Istwert (WpK) einen Rücksetz-Schwellwert (WpRT) überschreitet, wobei der Rücksetz-Schwellwert (WpRT) größer ist als der Reifendruck-Schwellwert (WpT), und
- die Reifendruck-Warnung (RW) zurückzusetzen, wenn der temperaturkompensierte Reifendruck-Istwert (WpK) den Rücksetz-Schwellwert (WpRT) überschreitet.

10. Reifendruck-Überwachungssystem (1) nach Anspruch 9, **dadurch gekennzeichnet, dass** das Reifen-Sensor-Modul (3) ferner ausgebildet ist, die Reifeninnentemperatur (T2) des jeweiligen Reifens (2) zu erfassen.

11. Reifendruck-Überwachungssystem (1) nach Anspruch 9 oder 10, **dadurch gekennzeichnet, dass** die Verarbeitungseinheit (5) einen flüchtigen Speicher (6a) und/oder einen nicht-flüchtigen Speicher (6b) aufweist zum Abspeichern der Referenz-Temperatur (RT) ab dem Warnzeitpunkt (tW) und bis zu einem Zurücksetzen der Reifendruck-Warnung (RW).

12. Reifendruck-Überwachungssystem (1) nach einem der Ansprüche 9 bis 11, **dadurch gekennzeichnet, dass** die Verarbeitungseinheit (5) im Reifen-Sensor-Modul (3) integriert ist und/oder im Innenraum (4) des Reifens (2) oder außerhalb des Reifens (2) positionierbar ist.

**Claims**

1. Method for generating a tyre pressure warning (RW) for at least one tyre (2) of a vehicle, having at least the following steps:

- determining a current tyre pressure value (WpR) as a function of an absolute current tyre pressure (pR_abs) which prevails in an interior (4) of the at least one tyre (2) (St1);
- determining whether the current tyre pressure value (WpR) of the at least one tyre (2) falls below a tyre pressure threshold value (WpT) (St2); and
- generating and outputting a tyre pressure warning (RW) at a warning time (tW) if the current tyre pressure value (WpR) of the respective tyre (2) falls below the tyre pressure threshold value (WpT) (St3),

**characterized in that**
in addition the following steps are provided:

- determining a temperature-compensated current tyre pressure value (WpK) if a tyre pressure warning (RW) is present (St4, St5), wherein the temperature-compensated current tyre pressure value (WpK) is determined at least after the warning time (tW) and depends on

- - a reference temperature (TR), wherein the reference temperature (TR) depends on a tyre internal temperature (T2) at the warning time (tW), wherein the tyre temperature (T2) is measured in an interior (4) of the respective tyre (2),
- - a current tyre pressure value (WpR) of the respective tyre (2) after the warning time (tW), and
- - the tyre internal temperature (T2) of the respective tyre (2) after the warning time (tW);

- determining whether the temperature-compensated current tyre pressure value (WpK) exceeds a reset threshold value (WpRT) (St6), wherein the reset threshold value (WpRT) is higher than the tyre pressure threshold value (WpT); and
- resetting the tyre pressure warning (RW) if the temperature-compensated current tyre pressure value (WpK) exceeds the reset threshold value (WpRT) (St7).

2. Method according to Claim 1, **characterized in that** the tyre pressure threshold value (WpT) and/or the reset threshold value (WpRT) for the respective tyre (2) depend/s on a predefined tyre pressure target value (WpS) for the respective tyre (2) or defined values.

3. Method according to Claim 2, **characterized in that**

- the tyre pressure threshold value (WpT) is formed from the tyre pressure target value (WpS) as a function of a first factor (F1), for example via WpT = F1 x WpS, wherein the first factor (F1) is smaller than one, for example 0.9, and/or
- the reset threshold value (WpRT) is formed from the tyre pressure target value (WpS) as a function of a second factor (F2), for example via WpRT = F2 x WpS, wherein the second factor (F2) is smaller than one, for example 0.95.

4. Method according to one of the preceding claims, **characterized in that** the resetting of the tyre pressure warning (RW) when the temperature-compensated current tyre pressure value (WpK) exceeds the reset threshold value (WpRT) is performed only if it is assumed that the tyre internal temperature (T2) at the warning time (tW) corresponds approximately to an ambient temperature (TU) of the respective tyre (2).

5. Method according to Claim 4, **characterized in that** it is assumed that the tyre temperature (T2) of the respective tyre (2) at the warning time (tW) corresponds approximately to the ambient temperature (TU) if the tyre (2) is stationary at the warning time (tW) and has not been operated for at least 15 minutes before the warning time (tW), or if the tyre (2) is in operation at the warning time (tW) but has not been operated for more than 5 minutes, preferably has not been operated for more than 2 minutes, before the warning time (tW).

6. Method according to one of the preceding claims, **characterized in that** the temperature-compensated current tyre pressure (WpK) takes into account the way in which the current tyre pressure value (WpR) changes as a function of the tyre internal temperature (T2) measured after the warning time (tW), starting from the reference temperature (TR), wherein, for this purpose, the temperature-compensated current tyre pressure value (WpK) is formed as a function of a relationship (TR/T2) between the reference temperature (TR) and the tyre internal temperature (T2).

7. Method according to one of the preceding claims, **characterized in that** the determination of a temperature-compensated current tyre pressure value (WpK) and the determination as to whether the temperature-compensated current tyre pressure value (WpK) exceeds a reset threshold value (WpRT) are performed continuously after the warning time (tW) until the tyre pressure warning (RW) is reset.

8. Method according to one of the preceding claims, **characterized in that** the reference temperature (RT) is stored individually for the wheel or individually for the vehicle, starting from the warning time (tW) and until the tyre pressure warning (RW) is reset.

9. Tyre pressure monitoring system (1), in particular for carrying out a method according to one of the preceding claims, comprising

- a tyre sensor module (3), which is designed to determine a current tyre pressure value (WpR) as a function of an absolute current tyre pressure (pR_abs) which prevails in the interior (4) of the tyre (2), and
- a processing unit (5), which is designed

-- to determine whether the current tyre pressure value (WpR) of the at least one tyre (2) falls below a tyre pressure threshold value (WpT),
-- to generate and output a tyre pressure warning (RW) at a warning time (tW) if the current tyre pressure value (WpR) of the respective tyre (2) falls below the tyre pressure threshold value (WpT),

**characterized in that**

the processing unit (5) is further designed

- to determine a temperature-compensated current tyre pressure value (WpK) if a tyre pressure warning (RW) is present, wherein the temperature-compensated current tyre pressure value (WpK) can be determined at least after the warning time (tW) and depends on

-- a reference temperature (TR), wherein the reference temperature (TR) depends on a tyre internal temperature (T2) at the warning time (tW), wherein the tyre temperature (T2) can be measured in an interior (4) of the respective tyre (2),
-- a current tyre pressure value (WpR) of the respective tyre (2) after the warning time (tW), and
-- a tyre internal temperature (T2) of the respective tyre (2) after the warning time (tW),

- to determine whether the temperature-compensated current tyre pressure value (WpK) exceeds a reset threshold value (WpRT), wherein the reset threshold value (WpRT) is higher than the tyre pressure threshold value (WpT); and
- to reset the tyre pressure warning (RW) if the temperature-compensated current tyre pressure value (WpK) exceeds the reset threshold value (WpRT).

10. Tyre pressure monitoring system (1) according to Claim 9, **characterized in that** the tyre sensor module (3) is further designed to detect the tyre internal temperature (T2) of the respective tyre (2).

11. Tyre pressure monitoring system (1) according to Claim 9 or 10, **characterized in that** the processing unit (5) has a volatile memory (6a) and/or a non-volatile memory (6b) for storing the reference temperature (RT), starting from the warning time (tW) and until the tyre pressure warning (RW) is reset.

12. Tyre pressure monitoring system (1) according to one of Claims 9 to 11 **characterized in that** the processing unit (5) is integrated in the tyre sensor module (3) and/or can be positioned in the interior (4) of the tyre (2) or outside the tyre (2).

## Revendications

1. Procédé de génération d'une alerte de pression de pneumatique (RW) destinée à au moins un pneumatique (2) d'un véhicule, ledit procédé comportant au moins les étapes suivantes :

- déterminer une valeur de pression de pneumatique réelle (WpR) en fonction d'une pression de pneumatique réelle absolue (pR_abs) qui règne dans un espace intérieur (4) de l'au moins un pneumatique (2) (St1) ;
- déterminer si la valeur de pression de pneumatique réelle (WpR) de l'au moins un pneumatique (2) devient inférieure à une valeur de pression de pneumatique seuil (WpT) (St2) ; et
- générer et délivrer une alerte de pression de pneumatique (RW) à un instant d'alerte (tW) lorsque la valeur de pression de pneumatique réelle (WpR) du pneumatique respectif (2) devient inférieure à la valeur de pression de pneumatique seuil (WpT) (St3),

**caractérisé en ce que** les étapes suivantes sont en outre prévues :

- déterminer une valeur de pression de pneumatique réelle compensée en température (WpK) en présence d'une alerte de pression de pneumatique (RW) (St4, St5), la valeur de pression de pneumatique réelle compensée en température (WpK) étant déterminée au moins après l'instant d'alerte (tW) et étant dépendante

-- d'une température de référence (TR), la température de référence (TR) étant dépendante d'une température de pneumatique intérieure (T2) à l'instant d'alerte (tW), la température de pneumatique (T2) étant mesurée dans un espace intérieur (4) du pneumatique respectif (2),
-- d'une valeur de pression de pneumatique réelle (WpR) du pneumatique respectif (2) après l'instant d'alerte (tW), et
-- de la température de pneumatique intérieure (T2) du pneumatique respectif (2) après l'instant d'alerte (tW) ;

- déterminer si la valeur de pression de pneumatique réelle compensée en température (WpK) devient supérieure à une valeur de réinitialisation seuil (WpRT) (St6), la valeur de réinitialisation seuil (WpRT) étant supérieure à la valeur de pression de pneumatique seuil (WpT) ; et
- réinitialiser l'alerte de pression de pneumatique (RW) si la valeur de pression de pneumatique réelle compensée en température (WpK) devient supérieure à la valeur de réinitialisation seuil (WpRT) (St7).

2. Procédé selon la revendication 1, **caractérisé en ce que** la valeur de pression de pneumatique seuil (WpT) et/ou la valeur de réinitialisation seuil (WpRT) pour le pneumatique respectif (2) sont dépendantes d'une valeur de pression de pneumatique cible spécifiée (WpS) pour le pneumatique respectif (2) ou de valeurs spécifiées.

3. Procédé selon la revendication 2, **caractérisé en ce que**

- la valeur de pression de pneumatique seuil (WpT) est formée en fonction d'un premier facteur (F1) à partir de la valeur de pression de pneumatique cible (WpS), par exemple par WpT = F1 x WpS, le premier facteur (F1) étant inférieur à un, par exemple 0,9, et/ou
- la valeur de réinitialisation seuil (WpRT) est formée en fonction d'un deuxième facteur (F2) à partir de la valeur de pression de pneumatique cible (WpS), par exemple par WpRT = F2 x WpS, le deuxième facteur (F2) étant inférieur à un, par exemple 0,95.

4. Procédé selon l'une des revendications précédentes, **caractérisé en ce que** la réinitialisation de l'alerte de pression de pneumatique (RW) est effectuée lorsque la valeur de pression de pneumatique réelle compensée en température (WpK) devient supérieure à la valeur de réinitialisation seuil (WpRT) uniquement si l'on suppose que la température de pneumatique intérieure (T2) à l'instant d'alerte (tW) correspond approximativement à une température ambiante (TU) du pneumatique respectif (2).

5. Procédé selon la revendication 4, **caractérisé en ce que** l'on suppose que la température de pneumatique (T2) du pneumatique respectif (2) à l'instant d'alerte (tW) correspond approximativement à la température ambiante (TU) si le pneumatique (2) est à l'instant d'alerte (tW) à l'arrêt et n'a pas été utilisé depuis au moins 15 minutes avant l'instant d'alerte (tW), ou si le pneumatique (2) est en service à l'instant d'alerte (tW) mais pas plus de 5 minutes, de préférence pas plus de 2 minutes, avant l'instant d'alerte (tW).

6. Procédé selon l'une des revendications précédentes, **caractérisé en ce que** la valeur de pression de pneumatique réelle compensée en température (WpK) tient compte de la variation de la valeur de pression de pneumatique réelle (WpR) à partir de la température de référence (TR) en fonction de la température de pneumatique intérieure mesurée (T2) après l'instant d'alerte (tW), la valeur de pression de pneumatique réelle compensée en température (WpK) étant formée en fonction d'un rapport (TR/T2) entre la température de référence (TR) et la température de pneumatique intérieure (T2).

7. Procédé selon l'une des revendications précédentes, **caractérisé en ce que** la détermination d'une valeur de pression de pneumatique réelle compensée en température (WpK) et la détermination du fait que la valeur de pression de pneumatique réelle compensée en température (WpK) devient supérieure à une valeur de réinitialisation seuil (WpRT) après l'instant d'alerte (tW) sont effectuées en continu jusqu'à ce que l'alerte de pression de pneumatique (RW) soit réinitialisée.

8. Procédé selon l'une des revendications précédentes, **caractérisé en ce que** la température de référence (RT) à partir de l'instant d'alerte (tW) et jusqu'à une réinitialisation de l'alerte de pression de pneumatique (RW) est mémorisée de manière spécifique à la roue ou spécifique au véhicule.

9. Système de surveillance de pression de pneumatique (1), destiné notamment à la mise en oeuvre d'un procédé selon l'une des revendications précédentes, ledit système comprenant

- un module capteur de pneumatique (3) qui est conçu pour déterminer une valeur de pression de pneumatique réelle (WpR) en fonction d'une pression de pneumatique réelle absolue (pR_abs) qui règne dans l'espace intérieur (4) du pneumatique (2), et
- une unité de traitement (5) qui est conçue

-- pour déterminer si la valeur de pression de pneumatique réelle (WpR) de l'au moins un pneumatique (2) devient inférieure à une valeur de pression de pneumatique seuil (WpT),
-- pour générer une alerte de pression de pneumatique (RW) à un instant d'alerte (tW) et pour la délivrer si la valeur de pression de pneumatique réelle (WpR) du pneumatique respectif (2) devient inférieure à la valeur de pression de pneumatique seuil (WpT),

**caractérisé en ce que**
l'unité de traitement (5) est également conçue

- pour déterminer une valeur de pression de pneumatique réelle compensée en température (WpK) en présence d'une alerte de pression de pneumatique (RW), la valeur de pression de pneumatique réelle compensée en température (WpK) pouvant être déterminée au moins après l'instant d'alerte (tW) et étant dépendante

-- d'une température de référence (TR), la température de référence (TR) étant dépendante d'une température de pneumatique intérieure (T2) à l'instant d'alerte (tW). la température de pneumatique (T2) pouvant être mesurée dans un espace intérieur (4) du pneumatique respectif (2),
-- d'une valeur de pression de pneumatique réelle (WpR) du pneumatique respectif (2) après l'instant d'alerte (tW), et
-- d'une température de pneumatique intérieure (T2) du pneumatique respectif (2) après l'instant d'alerte (tW),

- pour déterminer si la valeur de pression de pneumatique réelle compensée en température (WpK) devient supérieure à une valeur de réinitialisation seuil (WpRT), la valeur de réinitialisation seuil (WpRT) étant supérieure à la valeur de pression de pneumatique seuil (WpT), et
- pour réinitialiser l'alerte de pression de pneumatique (RW) lorsque la pression de pneumatique réelle compensée en température (WpK) devient supérieure à la valeur de réinitialisation seuil (WpRT).

**10.** Système de surveillance de pression de pneumatique (1) selon la revendication 9, **caractérisé en ce que** le module capteur de pneumatique (3) est également conçu pour détecter la température de pneumatique intérieure (T2) du pneumatique respectif (2).

**11.** Système de surveillance de pression de pneumatique (1) selon la revendication 9 ou 10, **caractérisé en ce que** l'unité de traitement (5) comporte une mémoire volatile (6a) et/ou une mémoire non-volatile (6b) destinées à mémoriser la température de référence (RT) à partir de l'instant d'alerte (tW) et jusqu'à ce que l'alerte de pression de pneumatique soit réinitialisée (RW).

**12.** Système de surveillance de pression de pneumatique (1) selon l'une des revendications 9 à 11, **caractérisé en ce que** l'unité de traitement (5) est intégrée dans le module capteur de pneumatique (3) et/ou dans l'espace intérieur (4) du pneumatique (2) ou peut être positionnée à l'extérieur du pneumatique (2).

TU, p0

2(T2)

3

5

6a

pR_abs

SR

6b

4

SW(RW)

**Fig. 1**

1

WpR(pR_abs; pR_rel) — St1

WpR < WpT=F1 x WpS — St2

tW:RW — St3

TR (T2, tW) — St4

WpK (TR,T2,WpR)
WpK_abs;WpK_rel — St5

WpK > WpRT=F2 x WpS — St6

RW — St7

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2692550 A1
- JP 2014065352 A
- DE 102016221633 A1
- US 2017305213 A1